# EUROPEAN PATENT SPECIFICATION

(11) **EP 3 006 421 B1**
(45) Date of publication and mention of the grant of the patent: **30.10.2019**
(21) Application number: 14804406.8
(22) Date of filing: 27.05.2014
(51) Int. Cl.: C04B 38/02, C04B 33/00, B32B 18/00

(54) **METHOD FOR MANUFACTURING CERAMIC FOAM ARTICLES WITH A FACING LAYER**
VERFAHREN ZUR HERSTELLUNG KERAMISCHER SCHAUMSTOFFARTIKEL MIT EINER ÜBERZUGSSCHICHT
PROCÉDÉ DE FABRICATION D'ARTICLES EN MOUSSE CÉRAMIQUE DOTÉS D'UNE COUCHE DE REVÊTEMENT

(30) Priority: 27.05.2013 RU 2013124084
(43) Date of publication of application: 13.04.2016
(73) Proprietor: Zvezdin, Dmitry Fyodorovich, Moscow 115470 (RU)
(72) Inventor: Zvezdin, Dmitry Fyodorovich, Moscow 115470 (RU)
(74) Representative: Benatov, Samuil Gabriel
(86) International application number: PCT/RU2014/000390
(87) International publication number: WO 2014/193272

(56) References cited:
- EP-A1- 2 053 031
- WO-A1-2011/116625
- WO-A2-2005/091946
- WO-A2-2006/050190
- RU-C1- 2 251 540
- RU-C2- 2 235 699
- RU-C2- 2 349 563
- RU-C2- 2 361 738
- BLANKS K S ET AL: "Crack Deflection in Ceramic Laminates Using Porous Interlayers", JOURNAL OF THE EUROPEAN CERAMIC SOCIETY, ELSEVIER SCIENCE PUBLISHERS, BARKING, ESSEX, GB, vol. 18, no. 13, 1 November 1998 (1998-11-01), pages 1945-1951, XP004143833, ISSN: 0955-2219, DOI: 10.1016/S0955-2219(98)00134-4

## Description

### Technical field of the invention

The claimed invention relates to manufacturing methods for foam ceramics (ceramic foam materials) and can be applied in industrial and civil construction for the manufacture of decorative items.

### Prior art

The known manufacturing method for three-layer construction products with facing and inner porous layers (for example, see patent RF No. 2243335, class C 04B 28/26, 2003)comprises placing of the lower and upper enclosing layers made of concrete mix and an inner heat-insulation layer into a mold. The upper and lower layers are interconnected by metal connections and a middle protective layer is produced by mixing quartz sand, sodium fluorosilicate, oxifos KD6-bis with subsequent joint grinding for 6-10 hours, introduction of liquid sodium glass and re-mixing, addition to the mixture of an aqueous solution of the foaming agent PO-6K and re-mixing during 6-12 minutes to obtain a foam mass, and its subsequent placement in the space between the enclosing upper and lower layers.

The known method allows producing fire-proof, environmentally friendly construction materials with good heat-insulating properties and a facing layer.

However, the effectiveness of application of the known method is reduced due to the difficulty and the complexity of its implementation and the multicomponent composition of the used mixture for manufacturing of products.

A manufacturing method for ceramic foam products, comprising slurry preparation, forming and burning at a temperature of 1300 °C, wherein the slurry consists of 70 wt.% of chamotte , 30 wt.% of clay, 60 wt.% of water and 15 wt.% of urethane resin (for example, see the patent application No. 5771851, Japan, publ. May 04, 1982) is known. The disadvantage of this method is the high density of obtained products that degrades its heat-insulating properties and limits its application field.

The closest method by its technical nature and obtained results is the method for manufacturing ceramic foam products, comprising operations of slurry and foam preparation, their mixing in order to obtain a foam mass, molding, heating and burning (see, for example, the Russian patent No. 2251540, class C 04B 38/02, 2006).

Using of a foam for manufacturing of ceramic products allows to obtain cellular structure, which improves the heat-insulating properties, reduces the coefficient of thermal conductivity and, therefore, increases the heat-insulating properties of the building structure.

However, the absence of a facing layer substantially limits the application field of the ceramic foam products obtained by the known method.

WO 2005/091946 A2 discloses a method for manufacturing a three layered thin film composite solid comprising the steps of 1) tape casting a series of sheets, one of said sheets comprising a combustible pore former; 2) laminating said sheets to create a layered structure having at least three layers; 3) sintering said three layered structure.

### Summary of the invention

The object of the claimed invention is to widen the application field of ceramic foam products.

This object is achieved by a manufacturing method for ceramic foam products with a facing layer, comprising preparation of a slurry and a foam, their mixing to obtain a ceramic foam mass, molding of products, drying and burning, in order to widen the application field of ceramic foam products, the molding powder is additionally prepared from a slurry in a spray-drying tower (SDT) at a pressure of sprayed slurry from 20 to 30 atm and with counterflow of hot air of 500 - 600 °C, which must undergo dehydration to average a moisture content of up to 4 - 9 wt.% from the centre to the outer parts of powder microspheres, and products are manufactured as multi-layered ones, containing outer layers, namely a facing layer and a substrate, with an porous ceramic layer therebetween, whereas the outer layers are produced from the molding powder by formation of sheets from said powder with a thickness from 0.5 to 5 mm at the specific molding pressure within a range from 300 to 500 kg/cm², and the inner porous layer is produced from a ceramic foam mass that is mineralized with a pre-pulverized molding powder until a soft foam mass is obtained with a moisture content of 16 - 23 %, from which plates with a thickness of 10 to 50 mm are formed after that; then the molded outer and inner layers are dried to zero moisture content, and the layers are laid one on top of the other at exit from dryers, thus forming a multi-layered structure, wherein from 2 to 10 plates of the porous layer are placed between the upper and lower outer layers, after that all stacked layers are burned at temperature of 1200 - 1250 °C during 50 - 100 minutes until they fuse with one another, wherein the upper facing layer is decorated with ceramic dyes or glazes by a method of digital printing prior to burning.

The object of the invention could not be achieved if the parameters for the manufacturing of ceramic foam products are beyond the specified limits.

The essence of the claimed method for manufacturing ceramic foam products is as follows: burning of separate layers with different density of the multi-layered structure, during which a single solid ceramic body is formed, that allows obtaining the high-performance ceramic foam products and significantly widen the field of their application by combining heat insulation, sound insulation, waterproofing and finishing properties in a single product. Thus the outer layers of the product with higher density, which strength is comparable with ceramic granite, not only protect the inner porous layer from weather and mechanical damages, but also are used as finishing (facing) layers, the outer surface of which is decorated with coloured ceramic dyes and glazes.

The inner layer having a lower density due to the porous structure is characterized in that it has improved thermal insulation properties and according to the proposed method may be made of any desired thickness.

The method is implemented as follows. Joint grinding of pre-prepared batch with water and deflocculant additives is performed in continuous ball modular mills to form a totally homogeneous mass - a slurry.

### Preferred example embodiments

### Example batch 1:

1. Clay Latnenskaya LT-2 - 30%
2. Clay Vesco Ceramics - 7%
3. Kaolin Glukhovetskiy - 13%
4. Feldspar Malyshevskiy - 50%
5. Deffloculant (sodium silicate) - 0.5% (over 100%)
   Water content in the final slurry is 38.8% (average density is 1.622 g/1)

### Example batch 2:

1. Clay Latnenskaya LT-3 - 10%
2. Clay Vesco Ceramics - 30%
3. Kaolin Glukhovetskiy - 10%
4. Feldspar Vishnevogorskiy - 45%
5. Quartz sand - 5%
6. Deffloculant (sodium tripolyphosphate) - 0.4% (over 100%)
   Water content in the final slurry is 37.4 % (average density is 1.643 g/1)

### Example batch 3:

1. Clay Miloslavskaya - 30%
2. Clay Latnenskaya LT-2 - 10%
3. Alkaline raw kaolin - 15%
4. Feldspar Vishnevogorskiy - 45%
5. Deffloculant (sodium tripolyphosphate) - 0.2 % (over 100%)
6. Deffloculant (sodium silicate) to 0.4 % (over 100%)
   Water content in the final slurry is 36.2 % (average density is 1.668 g/1)

Then, the part of the slurry is used to produce a molding powder by its dehydration in the spray dryer towers (SDT) in order to obtain the moisture content of 4 - 9 %, and it is subjected to ageing in storing silos for 48 hours for averaging the moisture content.

Sheets with a thickness of 0.5 to 5.0 mm for a facing layer and a lower layer (substrate) are made from the prepared molding powder by compression molding method at the specific pressure of 300 to 500 kg/cm². Simultaneously with manufacturing of the outer layers, an inner porous layer of a ceramic foam product is produced by mixing of the slurry with a foaming agent and by performing a foaming procedure. The obtained foam mass then is mineralized with the pre-pulverized molding powder in order to obtain a soft ceramic foam mass with moisture content of 16 - 23 %, which is placed in a molding unit, where it takes the form of a flat plate (beam) with a thickness from 10 to 50 mm. The molded sheets of the outer layers and the plates of the inner porous layer are dried up to obtain almost zero moisture content (less than 0.5 %), gaining the necessary technological strength.

The dried layers are stacked in piles, and the porous layer is placed between the outer layers, after that the multi-layered structure undergoes burning to reach a full sintering in roller kilns at temperature of 1200 - 1250 °C with a burning cycle of 50 - 100 min. Before burning, the outer facing layer is covered with decorative ceramic dyes and glazes using digital printing method.
*Example 1.* Joint grinding of pre-prepared batch with water and the deflocculant additives is performed in a ball mill to form a totally homogeneous mass - a slurry. Then, the part of the slurry(∼ 50% of the total volume) is used to make a molding powder by its dehydration in a spray drier tower to a moisture content of 9 % and it is subjected to ageing in the storing silos for 48 hours for averaging the moisture content.
   Sheets with a thickness of 0.5 mm for the facing layer and the lower layer (substrate) are made from the prepared molding powder by compression molding method at a specific pressure of 300 kg/cm². Simultaneously with manufacturing of the outer layers, an inner porous layer of ceramic foam product is produced by mixing the slurry with the foaming agent and by performing a foaming procedure. The obtained foam mass is mineralized with the pre-pulverized molding powder in order to obtain a soft ceramic foam mass with moisture content of 23 %, which is placed in a molding unit, where it takes the form of a flat plate (beam) with a thickness of 10 mm. The molded sheets of the outer layers and plates of the inner porous layer are dried up to obtain almost zero moisture content (less than 0.5 %), gaining the necessary technological strength. The dried layers are stacked in piles, and the porous layers (10 pc.) are placed inside the outer layers, after that a multi-layered structure undergoes burning to reach a full sintering in roller kilns at temperature of 1200 °C with a burning cycle of 50 - 100 min. Before burning, the outer facing layer is covered with decorative ceramic dyes and glazes using a digital printing method.
*Example 2.* Manufacturing technology of ceramic foam products is the same as in Example 1, but the molding powder is dehydrated in a spray dryer up to the moisture content of 5.5 %, sheets with the thickness of 2.8 mm are made from the obtained molding powder at specific pressure of 400 kg/cm²; the obtained foam mass is mineralized with the pre-pulverized molding powder in order to obtain a soft ceramic foam mass with moisture content of 19 %, which is used to form the flat plates (beams) with a thickness of 25 mm, and a multi-layered ceramic foam structure (2 outer and 5 inner layers) is burned at the temperature of 1220 °C with a burning cycle of 75 min.
*Example 3.* Ceramic foam products are manufactured according to Example 1, but the molding powder is dehydrated in a spray dryer to obtain moisture content of 4 %, sheets with thickness of 5.0 mm are made from the obtained molding powder at specific pressure of 500 kg/cm²; the foam mass is mineralized with the pre- pulverized molding powder in order to obtain a soft ceramic foam mass with moisture content of 16 %, which is used to form flat plates (beams) with thickness of 50 mm, and the multi-layered ceramic foam structure (2 outer and 2 inner layers) is burned at temperature of 1250 °C with a burning cycle of 100 min.

Properties of the ceramic foam products obtained by the proposed method are specified in the table.

| Properties | Parameters | | | | | | |
|---|---|---|---|---|---|---|---|
| | Porous layer | | | Facing layer | | | Prototype |
| | Ref. Example | | | | | | |
| | 1 | 2 | 3 | 1 | 2 | 3 | |
| average density, kg/m³ | 100 | 150 | 250 | 2400 | 2500 | 2600 | 720-780 |
| breaking point, MPa: | | | | | | | |
| - compression strength | 3,5 | 5,0 | 30,0 | 90,0 | 120,0 | 150,0 | 4,1-4,8 |
| - bend strength | 4,0 | 5,0 | 10,0 | 30,0 | 40,0 | 50,0 | |
| thermal conductivity coefficient, Watt/m·K | 0,035 | 0,050 | 0,075 | 1,0 | 1,3 | 1,5 | 0,15-0,155 |
| Adhesion-tearing strength *, MPa | 4 | 10 | 30 | 4 | 10 | 30 | - |

| | | | | | | | |
|---|---|---|---|---|---|---|---|
| * - Exceeds the tensile strength limits of the inner porous layer. | | | | | | | |

The proposed method permits not only to obtain ceramic foam products with improved heat, sound and waterproof properties due to the manufacturing of the inner porous layer of any desired thickness, but also due to the production of a facing layer as a part of a single ceramic body, that substantially widens the application field of the ceramic foam products, while reducing the complexity of the production by excluding the operations for assembly of a finishing layer.

## Claims

1. A method for manufacturing of ceramic foam products with a facing layer, which comprises preparation of a slurry and a foam, their mixing to produce a ceramic foam mass, molding of products, drying and burning, **characterized in that**, a molding powder is additionally prepared from a slurry with dehydration of the slurry in a spray-drying tower to moisture content of 4 - 9 wt.% with subsequent ageing for averaging by moisture for 46 - 48 hours, and products are manufactured as multi-layered ones, comprising outer layers, namely: facing layer and substrate layer, with a porous ceramic layer therebetween, wherein the outer layers are manufactured from the molding powder by molding of sheets from said powder with thickness from 0.5 to 5 mm at specific molding pressure within a range from 300 to 500 kg/cm², and the inner porous layer is manufactured from ceramic foam mass that is mineralized with pre-pulverized molding powder until obtaining a soft foam mass with a moisture content of 16 - 23 % from which plates with thickness from 10 to 50 mm are subsequently formed; then the molded outer layers and inner layer are dried to zero moisture content, and at the exit from dryers said layers are laid one on top of the other, thus forming a multi-layered structure, wherein from 2 to 10 plates of the porous layer are placed between the upper and lower outer layers, and then all stacked layers are burned at temperature of 1200 - 1250 °C for 50 - 100 min, until they fuse with one another, wherein prior to burning the upper face layer is decorated by ceramic dyes or glazes by a method of digital printing.

## Patentansprüche

1. Verfahren zur Herstellung von keramischen Schaumprodukten mit einer Deckschicht, umfassend die Herstellung einer Aufschlämmung und eines Schaums, deren Vermischung zur Herstellung einer keramischen Schaummasse, Formen von Produkten, Trocknen und Brennen, **dadurch gekennzeichnet, dass** zusätzlich ein Formpulver hergestellt wird aus einer Aufschlämmung mit Entwässerung der Aufschlämmung in einem Sprühtrocknungsturm auf einen Feuchtigkeitsgehalt von 4 - 9 Gew.-% mit anschließender Alterung zur Halbierung der Feuchtigkeit für 46 - 48 Stunden, und Produkte werden als mehrschichtige Produkte hergestellt, umfassend äußere Schichten, nämlich Deckschicht und Substratschicht, mit einer porösen Keramikschicht dazwischen, wobei die äußeren Schichten aus Formpulver durch Formen von Blättern aus dem Pulver mit einer Dicke von 0,5 bis 5 mm bei einem spezifischen Formdruck in einem Bereich von 300 bis 500 kg/cm² hergestellt sind und die innere poröse Schicht aus einer Keramikschaummasse hergestellt wird, die mit vorpulverisierter Formpulver mineralisiert ist, bis eine weiche Schaummasse mit einem Feuchtigkeitsgehalt von 16 - 23% erhalten wird, aus der anschließend Platten mit einer Dicke von 10 bis 50 mm geformt werden; dann werden die geformten äußeren Schichten und die innere Schicht auf einen Feuchtigkeitsgehalt von Null getrocknet, und am Austritt aus den Trocknern werden die Schichten übereinandergelegt, wodurch eine mehrschichtige Struktur gebildet wird, bei der 2 bis 10 Platten der porösen Schicht zwischen die obere und untere Deckschicht gelegt werden, und dann werden alle gestapelten Schichten bei einer Temperatur von 1200 - 1250° C für 50 - 100 min gebrannt, bis sie miteinander verschmelzen, wobei vor dem Brennen die obere Deckschicht mit keramischen Farbstoffen oder Glasuren durch ein Digitaldruckverfahren verziert wird.

## Revendications

1. Méthode de fabrication de produits en mousse céramique avec une couche de parement, la méthode comprenant la préparation d'une barbotine et d'une mousse dont le mélange produit une masse de mousse céramique, et comprenant le moulage des produits, leur séchage et leur cuisson, **caractérisée en ce qu'**une poudre de moulage est en outre préparée d'une barbotine avec une déshydratation de la barbotine dans une tour de séchage par vaporisation à une teneur en humidité de 4% à 9% en poids et une maturité résultante d'une valeur moyenne d'humidité entre 46 heures et 48 heures, et **en ce que** les produits sont fabriqués en multicouches comprenant des couches externes dont une couche de parement et une couche de substrat avec une couche de céramique poreuse entre-elles, dans lesquels produits les couches externes sont fabriquées à partir de la poudre de moulage par moulage de feuilles à partir de ladite poudre d'une épaisseur comprise entre 0.5 mm à 5 mm à une pression de moulage dans une plage spécifique de 300 kg/cm² à 500 kg/cm², la couche poreuse étant fabriquée à partir d'une masse de mousse céramique qui est minéralisée par pré-pulvérisation de la poudre de moulage jusqu'à l'obtention d'une masse de mousse souple avec une teneur en humidité de 16% à 23% à partir de laquelle sont ensuite formées des plaques d'une épaisseur comprise entre 10mm et 50mm, puis les couches extérieures moulées et la couche intérieure étant séchées jusqu'à une teneur en humidité nulle, lesdites couches en sortie des séchoirs sont superposées l'une sur l'autre formant ainsi une structure multicouche dans laquelle de 2 à 10 plaques de la couche poreuse sont placées entre les couches extérieures supérieure et inférieure, puis toutes les couches empilées étant cuites à une température comprise entre 1200°C et 1250°C pendant 50 minutes à 100 minutes jusqu'à leur fusion l'une à l'autre, et **en ce que** préalablement à la cuisson, la couche de surface supérieure est décorée par des teintures à céramique ou des vernis par une méthode d'impression numérique.
